# EUROPÄISCHE PATENTANMELDUNG

(11) **EP 1 273 886 A1**
(43) Veröffentlichungstag der Anmeldung: **08.01.2003**
(21) Anmeldenummer: 02012036.6
(22) Anmeldetag: 31.05.2002
(51) Int. Cl.: G01C 21/36, G08G 1/0968, G10L 15/26

(54) **System und Verfahren zum Navigieren eines Fortbewegungsmittels**

(30) Priorität: 06.07.2001 DE 10132887
(71) Anmelder: ROBERT BOSCH GMBH, 70442 Stuttgart (DE)
(72) Erfinder: Woestemeyer, Stefan, 31135 Hildesheim (DE); Gaertner, Ulrich, 31171 Nordstemmen (DE)

(57) **Zusammenfassung**

Um ein System (100) sowie ein Verfahren zum Navigieren eines Fortbewegungsmittels, insbesondere eines Fahrzeugs, eines Flugzeugs, eines Kraftfahrzeugs oder eines Schiffs, von mindestens einem Standort zu mindestens einem Zielort zu schaffen, durch die der für die Spracherkennung und -umwandlung erforderliche Bedarf an Speichervolumen, insbesondere an Arbeitsspeichervolumen, minimiert wird, wird vorgeschlagen, daß die Spracheingabe mit Teilmengen, insbesondere mit sequentiellen Abschnitten oder mit aufeinanderfolgenden Teilmengen, der in der Speichereinheit (18) abgelegten Elemente der Navigationsdatenbasis verglichen wird.

## Beschreibung

### Technisches Gebiet

Die vorliegende Erfindung betrifft ein System zum Navigieren eines Fortbewegungsmittels, insbesondere eines Fahrzeugs, eines Flugzeugs, eines Kraftfahrzeugs oder eines Schiffs, von mindestens einem Standort zu mindestens einem Zielort, aufweisend mindestens eine Eingabeeinrichtung zum Eingeben mindestens eines Befehls und/oder mindestens eines Standorts und/oder mindestens eines Zielorts, welcher Eingabeeinrichtung mindestens ein mindestens eine Spracheeingabe erkennendes und in mindestens eine entsprechende Eingabe an das System umwandelndes Spracheingabemodul zugeordnet ist, wobei das Spracheingabemodul
- mindestens eine Speichereinheit für Elemente mindestens einer Navigationsdatenbasis, insbesondere für Befehlsnamen und/oder für Ortsnamen und/oder für Straßennamen und/oder für Points of Interest (POI), aufweist,
- einer Spracheingabe durch Vergleichen mittels mindestens eines Komparatormittels jeweils mindestens ein Element der Navigationsdatenbasis, insbesondere mindestens einen Befehlsnamen bzw. mindestens einen Ortsnamen bzw. mindestens einen Straßennamen bzw. mindestens einen Point of Interest (POI), zuordnet und
- dieses jeweils zugeordnete Element als Befehl, als Standort und/oder als Zielort an das System weitergibt.

Die vorliegende Erfindung betrifft des weiteren ein Verfahren zum Navigieren eines Fortbewegungsmittels, insbesondere eines Fahrzeugs, eines Flugzeugs, eines Kraftfahrzeugs oder eines Schiffs, von mindestens einem Standort zu mindestens einem Zielort, wobei
- mindestens ein Befehl und/oder mindestens ein Standort und/oder mindestens ein Zielort mittels mindestens einer Eingabeeinrichtung eingegeben werden und
- in der Eingabeeinrichtung mittels mindestens eines Spracheingabemoduls eine Spracherkennung durchgeführt wird, indem mindestens eine Spracheeingabe in mindestens eine entsprechende Eingabe an das System umgewandelt wird, wobei
   -- Elemente mindestens einer Navigationsdatenbasis, insbesondere Befehlsnamen und/oder Ortsnamen und/oder Straßennamen und/oder Points of Interest (POI), in mindestens einer Speichereinheit zur Verfügung gestellt werden,
   -- der Spracheingabe durch Vergleichen mittels mindestens eines Komparatormittels jeweils mindestens ein Element der Navigationsdatenbasis, insbesondere mindestens ein Befehlsname bzw. mindestens ein Ortsname bzw. mindestens ein Straßenname bzw. mindestens ein Point of Interest (POI), zugeordnet wird und
- dieses jeweils zugeordnete Element als Befehl, als Standort und/oder als Zielort an das System weitergegeben wird.

### Stand der Technik

In Fortbewegungsmitteln, wie beispielsweise in Fahrzeugen, in Flugzeugen, in Kraftfahrzeugen oder in Schiffen, fest installierte Navigationssysteme leiten den Führer des Fortbewegungsmittels einfach, schnell und sicher vom aktuellen Standort zu einem gewünschten Zielort, ohne daß der Führer des Fortbewegungsmittels vorher aufwendig eine Route planen und entsprechendes Kartenmaterial erwerben muß.

Hierzu liegen entsprechende, etwa auf Karten, Landkarten oder Straßenkarten basierende Navigationsdaten beispielsweise auf CD-ROM (= Compact Disc-Read Only Memory) oder auf DVD (= Digital Versatile Disc) gespeichert vor. Das Navigationssystem nutzt beispielsweise GPS (= Global Positioning System), um den momentanen Standort festzustellen und die entsprechenden Navigationsanweisungen zu berechnen, die zum vorbestimmten Ziel führen. Die Navigationsdaten beinhalten in diesem Zusammenhang vorzugsweise Daten über Straßen und Wege für Kraftfahrzeuge.

Bevor jedoch das Navigationssystem seine Aufgabe übernehmen und eine Route vom Standort zum Zielort berechnen kann, ist es notwendig, daß ein Benutzer den gewünschten Zielort und erforderlichenfalls auch den aktuellen Standort eingibt; dies erfolgt beispielsweise über eine Tastatur oder über eine ähnliche, manuell zu betätigende Eingabeeinrichtung, was jedoch umständlich sowie zeitraubend ist und gewisse Grundkenntnisse bei der Bedienung des Navigationssystems erfordert.

Aus diesem Grunde gibt es Navigationssysteme mit angeschlossenem Sprachbediensystem (vgl. etwa Druckschrift DE 198 35 556 A1). Das Sprachbediensystem kann hierbei als externe, über einen (Daten-)Bus angeschlossene Komponente oder als in das Navigationssystem integrierte Einheit ausgebildet sein. Für das sprachbediente Navigieren, das heißt in erster Linie für das Eingeben von Orts- und/oder Straßennamen und/oder von sogenannten "Points of Interest" (POI), ist in diesem Zusammenhang ein Abgleichen mit der Navigationsdatenbasis über Buchstabieren oder dergleichen erforderlich.

Hierdurch kann aus den Buchstaben-Hypothesen eine Liste mit den wahrscheinlichsten Namen (--> Ergebnisliste), verglichen mit der eingesprochenen Buchstabenfolge, erstellt werden. Für diesen Vergleich wird bei den Navigationssystemen gemäß dem Stand der Technik (vgl. DE 198 35 556 A1) die vollständige Liste der Elemente der Navigationsdatenbasis benötigt; hierdurch wird der Vorgang des Vergleichens der Spracheingabe mit den Elementen der Navigationsdatenbasis ausgesprochen speicherintensiv und langwierig.

### Darstellung der Erfindung: Aufgabe, Lösung, Vorteile

Ausgehend von den vorstehend dargelegten Nachteilen und Unzulänglichkeiten liegt der vorliegenden Erfindung die Aufgabe zugrunde, ein System sowie ein Verfahren zum Navigieren eines Fortbewegungsmittels, insbesondere eines Fahrzeugs, eines Flugzeugs, eines Kraftfahrzeugs oder eines Schiffs, von mindestens einem Standort zu mindestens einem Zielort, zur Verfügung zu stellen, durch die der für die Spracherkennung und -umwandlung erforderliche Bedarf an Speichervolumen, insbesondere an Arbeitsspeichervolumen, minimiert wird.

Diese Aufgabe wird durch ein System mit den im Anspruch 1 angegebenen Merkmalen sowie durch ein Verfahren mit den im Anspruch 7 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Gemäß der Lehre der vorliegenden Erfindung werden mithin auf überraschende Weise ein effizientes System sowie ein komfortables und einfach zu realisierendes Verfahren bereitgestellt, durch die das sogenannte partielle "Matching", das heißt das Vergleichen der Spracheingabe mit den Elementen der Navigationsdatenbasis, mit vorzugsweise aufeinanderfolgenden Abschnitten bzw. Ausschnitten aus der Navigationsdatenbasis durchgeführt wird. Der Fachmann auf dem Gebiet der Navigationstechnik und der Telematik wird in diesem Zusammenhang insbesondere zu schätzen wissen, daß der hierdurch pro Vergleichsvorgang benötigte Speicherplatz erheblich reduziert werden kann.

Hierzu werden sequentiell Teil der Navigationsdatenbasis vom Navigationsdatenträger, beispielsweise von einer CD-ROM oder von einer DVD, gelesen, wodurch die Verarbeitung im System, insbesondere in der Recheneinheit des Systems, zwar mehrfach berechnet, jedoch zur Verarbeitungszeit im Vergleich zur konventionellen Navigationstechnik jeweils weniger Speicherplatz belegt wird.

Alternativ oder ergänzend hierzu kann die erkannte Spracheingabe zweckmäßigerweise auch über mindestens einen Datenbus, insbesondere über mindestens einen CAN-Bus (CAN = Controller Area Network) oder über mindestens einen anderen elektrischen Bus oder über mindestens eine optische Anbindung, etwa über mindestens einen Lichtwellenleiter (LW), an das System übertragen werden; hierzu ist das Spracheingabemodul zweckmäßigerweise über einen derartigen Bus mit dem System verbunden. Da beispielsweise ein CAN-Bus für das System meist schon vorhanden ist, sind auch bereits in Betrieb befindliche Systeme einfach, kostengünstig und schnell zu einem Navigationssystem mit Spracheingabe gemäß der vorliegenden Erfindung nachrüstbar.

### Kurze Beschreibung der Zeichnungen

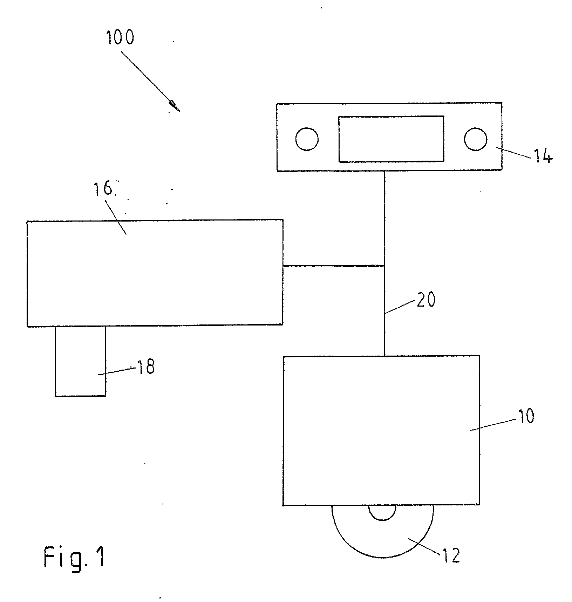

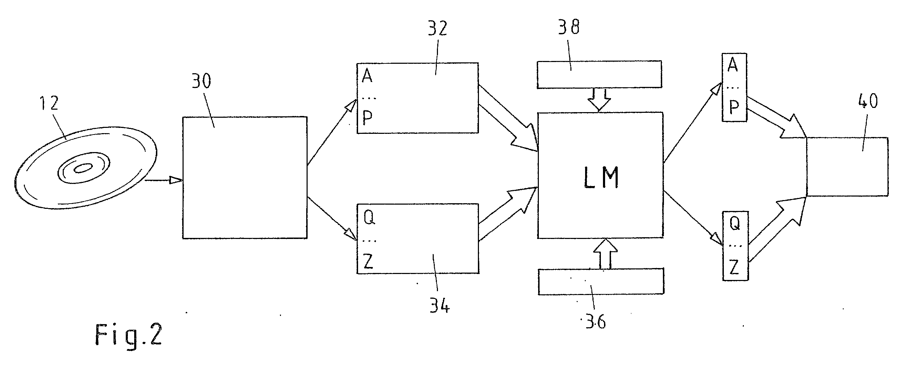

Weitere Ausgestaltungen, Merkmale und Vorteile der vorliegenden Erfindung werden nachstehend anhand des durch die Figuren 1 und 2 veranschaulichten Ausführungsbeispiels näher erläutert.

Es zeigt:
- Fig. 1: ein Ausführungsbeispiel eines Systems gemäß der vorliegenden Erfindung, in schematischer Prinzipdarstellung; und
- Fig. 2: ein Ausführungsbeispiel eines Verfahrens gemäß der vorliegenden Erfindung für das System aus Fig. 1, in schematischer Prinzipdarstellung.

Gleiche oder ähnliche Ausgestaltungen, Elemente oder Merkmale sind in den Figuren 1 und 2 mit identischen Bezugszeichen versehen.

### Bester Weg zur Ausführung der Erfindung

Die in Figur 1 schematisch dargestellte exemplarische Ausführungsform eines Systems 100 gemäß der vorliegenden Erfindung weist ein Navigationsgerät 10 mit Lesegerät für eine CD-ROM 12 oder für eine DVD, eine Bedieneinheit 14 zum manuellen Eingeben von Befehlen, Orts- bzw. Straßennamen, Points of Interest (POI) sowie ein Spracheingabemodul 16 mit einem Kartenleser für eine PCMCIA- oder ISO-Karte 18 oder für einen anderen Datenträger auf. Das Navigationsgerät 10, die Bedieneinheit 14 und das Spracheingabemodul 16 sind über einen Steuerbus 20 miteinander verbunden.

Die Karte 18 stellt auf dieser gespeicherte Befehle und/oder Orts- bzw. Straßennamen und/oder Points of Interest (POI) zur Verfügung, die im Spracheingabemodul 16 einer Spracheingabe zugeordnet werden. Nach erfolgter Zuordnung wird der entsprechende Befehl und/oder der entsprechende Orts- bzw. Straßenname und/oder der entsprechende Point of Interest (POI) an das Navigationsgerät 10 übertragen Dieses führt entweder den Befehl aus oder setzt den vom Spracheingabemodul 16 übertragenen Orts- bzw. Straßennamen oder den vom Spracheingabemodul 16 übertragenen Point of Interest (POI) als aktuellen Standort bzw. als Zielort.

Der Vorgang der Spracherkennung erfolgt hierbei im Spracheingabemodul 16, das beispielsweise erkannte Buchstabenfolgen, Silben oder Wörter mit gespeicherten Namen für Befehle und/oder für Orts- bzw. Straßennamen und/oder für Points of Interest (POI) vergleicht. Diese Namen könnten für den Vorgang des Vergleichens alternativ beispielsweise von der CD-ROM 12 oder von einer DVD im Navigationsgerät 10 über den Steuerbus 20 übertragen werden. Eine schnellere Sprachverarbeitung erzielt man jedoch dadurch, daß diese Namen auf der Karte 18 gespeichert sind, die direkt vom Spracheingabemodul 16 gelesen wird.

Die vorliegende Erfindung zeichnet sich nun dadurch aus, daß der vorbeschriebene Vorgang des "Matching", das heißt des Vergleichens zwar weiterhin auf Basis der vollständigen Namensliste 30 (vgl. Figur 2) erfolgt, hierfür jedoch mehrere, das heißt mindestens zwei separate Schritte vorgesehen sind, denn die Spracheingabe wird mit den Teilmengen 32 bzw. 34 (vgl. Figur 2: komprimierte, den Teilmengen 32 bzw. 34 entsprechende Namenslisten von "A" bis "P" bzw. von "Q" bis "Z" --> partielle Bearbeitung) der auf der CD-ROM 12 oder auf einer DVD gespeicherten Elemente der Navigationsdatenbasis verglichen; zu bemerken ist in diesem Zusammenhang, daß gemäß der Lehre der vorliegenden Erfindung auch mehr als zwei Teilmengen, das heißt mehr als zwei den Teilmengen entsprechende Namenslisten vorgesehen sein können.

Für diesen Vergleich der Buchstaben-Hypothesen 36 (vgl. Figur 2) mit den möglichen Zielorten unter Berücksichtigung der Metrikdaten 38 (vgl. Figur 2) wird demzufolge mehrfach, und hierbei mindestens zweifach, auf aufeinanderfolgende Ausschnitte des Navigationsdatenträgers zugegriffen; dies bedeutet mit anderen Worten, daß durch das partielle "Matching" "burstartig" mehrere Zugriffe auf den Navigationsdatenträger bei gleichzeitig ausgesprochen geringem Bedarf an flüchtigem Speicher der Recheneinheit des Systems 100 vorgenommen werden.

Die Ergebnisse der jeweiligen Teilvergleiche (partielle "Distance"-Liste gemäß Figur 2) werden bis zum abschließenden Auswerten zwischengespeichert. Als Ergebnis dieses Auswertens liegt schließlich eine Ergebnisliste 40 (vgl. Figur 2) mit den wahrscheinlichsten Zielorten vor.

## Patentansprüche

1. System (100) zum Navigieren eines Fortbewegungsmittels, insbesondere eines Fahrzeugs, eines Flugzeugs, eines Kraftfahrzeugs oder eines Schiffs, von mindestens einem Standort zu mindestens einem Zielort, aufweisend mindestens eine Eingabeeinrichtung zum Eingeben mindestens eines Befehls und/oder mindestens eines Standorts und/oder mindestens eines Zielorts, welcher Eingabeeinrichtung mindestens ein mindestens eine Spracheeingabe erkennendes und in mindestens eine entsprechende Eingabe an das System (100) umwandelndes Spracheingabemodul (16) zugeordnet ist, wobei das Spracheingabemodul (16)
- mindestens eine Speichereinheit (18) für Elemente mindestens einer Navigationsdatenbasis, insbesondere für Befehlsnamen und/oder für Ortsnamen und/oder für Straßennamen und/oder für Points of Interest (POI), aufweist,
- einer Spracheingabe durch Vergleichen mittels mindestens eines Komparatormittels jeweils mindestens ein Element der Navigationsdatenbasis, insbesondere mindestens einen Befehlsnamen bzw. mindestens einen Ortsnamen bzw. mindestens einen Straßennamen bzw. mindestens einen Point of Interest (POI), zuordnet und
- dieses jeweils zugeordnete Element als Befehl, als Standort und/oder als Zielort an das System (100) weitergibt,
**dadurch gekennzeichnet,**
**daß** das Komparatormittel zum Vergleichen der Spracheingabe mit Teilmengen (32, 34), insbesondere mit sequentiellen Abschnitten oder mit aufeinanderfolgenden Teilmengen, der in der Speichereinheit (18) abgelegten Elemente der Navigationsdatenbasis ausgelegt ist.

2. System (100) gemäß Anspruch 1, **dadurch gekennzeichnet, daß** die Befehlsnamen und/oder die Ortsnamen und/oder die Straßennamen und/oder die Points of Interest (POI) innerhalb der Teilmengen (32, 34) gemäß mindestens einem Ordnungsschema, insbesondere gemäß dem Alphabet oder gemäß einer zugeordneten Wahrscheinlichkeit, abgelegt sind.

3. System (100) gemäß Anspruch 1 oder 2, **dadurch gekennzeichnet,**
- **daß** das Spracheingabemodul (16)
-- im System (100) integriert ist oder
-- außerhalb des Systems (100) angeordnet ist und
- **daß** das Spracheingabemodul (16) an das System (100) angeschlossen ist, insbesondere mit dem System (100) in Verbindung steht.

4. System (100) gemäß Anspruch 3, **dadurch gekennzeichnet, daß** das Spracheingabemodul (16) über mindestens einen Datenbus (20), insbesondere über mindestens einen CAN-Bus (CAN = Controller Area Network) oder über mindestens einen anderen elektrischen Bus oder über mindestens eine optische Anbindung, etwa über mindestens einen Lichtwellenleiter (LW), mit dem System (100) verbunden ist.

5. System (100) gemäß mindestens einem der Ansprüche 1 bis 4, **dadurch gekennzeichnet,**
- **daß** die Speichereinheit als mindestens eine Compact Disc (12), insbesondere als mindestens eine CD-ROM (= Compact Disc-Read Only Memory), oder als mindestens eine Digital Versatile Disc (DVD) ausgebildet ist und
- **daß** das Spracheingabemodul (16) mindestens eine CD-Leseeinrichtung oder mindestens eine DVD-Leseeinrichtung aufweist.

6. System (100) gemäß mindestens einem der Ansprüche 1 bis 5, **dadurch gekennzeichnet,**
- **daß** die Speichereinheit als mindestens eine Karteneinheit (18), insbesondere als mindestens eine PCMCIA-Karte (PCMCIA = Personal Computer Memory Card International Association) oder als mindestens eine ISO-Karte (ISO = International Standardization Organisation) oder als mindestens eine andere Speichereinheit, ausgebildet ist und
- **daß** das Spracheingabemodul (16)
-- mindestens eine Dateneingabeeinheit und/oder
-- mindestens eine Kartenleseeinrichtung
aufweist.

7. Verfahren zum Navigieren eines Fortbewegungsmittels, insbesondere eines Fahrzeugs, eines Flugzeugs, eines Kraftfahrzeugs oder eines Schiffs, von mindestens einem Standort zu mindestens einem Zielort, wobei
- mindestens ein Befehl und/oder mindestens ein Standort und/oder mindestens ein Zielort mittels mindestens einer Eingabeeinrichtung eingegeben werden und
- in der Eingabeeinrichtung mittels mindestens eines Spracheingabemoduls (16) eine Spracherkennung durchgeführt wird, indem mindestens eine Spracheeingabe in mindestens eine entsprechende Eingabe an das System (100) umgewandelt wird, wobei
-- Elemente mindestens einer Navigationsdatenbasis, insbesondere Befehlsnamen und/oder Ortsnamen und/oder Straßennamen und/oder Points of Interest (POI), in mindestens einer Speichereinheit (18) zur Verfügung gestellt werden,
-- der Spracheingabe durch Vergleichen mittels mindestens eines Komparatormittels jeweils mindestens ein Element der Navigationsdatenbasis, insbesondere mindestens ein Befehlsname bzw. mindestens ein Ortsname bzw. mindestens ein Straßenname bzw. mindestens ein Point of Interest (POI), zugeordnet wird und
- dieses jeweils zugeordnete Element als Befehl, als Standort und/oder als Zielort an das System (100) weitergegeben wird,
**dadurch gekennzeichnet,**
**daß** die Spracheingabe mit Teilmengen (32, 34), insbesondere mit sequentiellen Abschnitten oder mit aufeinanderfolgenden Teilmengen, der in der Speichereinheit (18) abgelegten Elemente der Navigationsdatenbasis verglichen wird.

8. Verfahren gemäß Anspruch 7, **dadurch gekennzeichnet, daß** die Ergebnisse der jeweiligen Teilvergleiche bis zum abschließenden Auswerten zwischengespeichert werden.

9. Verfahren gemäß Anspruch 7 oder 8, **dadurch gekennzeichnet, daß** die Befehlsnamen und/oder die Ortsnamen und/oder die Straßennamen und/oder die Points of Interest (POI) innerhalb der Teilmengen (32, 34) gemäß mindestens einem Ordnungsschema sortiert, insbesondere gemäß dem Alphabet oder gemäß einer zugeordneten Wahrscheinlichkeit sortiert, zur Verfügung gestellt werden.

10. Verfahren gemäß mindestens einem der Ansprüche 7 bis 9, **dadurch gekennzeichnet, daß** die erkannte Spracheingabe über mindestens einen Datenbus (20), insbesondere über mindestens einen CAN-Bus (CAN = Controller Area Network) oder über mindestens einen anderen elektrischen Bus oder über mindestens eine optische Anbindung, etwa über mindestens einen Lichtwellenleiter (LW), an das System (100) übertragen wird.

11. Verfahren gemäß mindestens einem der Ansprüche 7 bis 10, **dadurch gekennzeichnet, daß** die Elemente der Navigationsdatenbasis, insbesondere die Befehlsnamen und/oder die Ortsnamen und/oder die Straßennamen und/oder die Points of Interest (POI), auf mindestens einer Compact Disc (12), insbesondere auf mindestens einer CD-ROM (= Compact Disc-Read Only Memory), oder auf mindestens einer Digital Versatile Disc (DVD) gespeichert werden.

12. Verfahren gemäß mindestens einem der Ansprüche 7 bis 11, **dadurch gekennzeichnet, daß** die Elemente der Navigationsdatenbasis, insbesondere die Befehlsnamen und/oder die Ortsnamen und/oder die Straßennamen und/oder die Points of Interest (POI), in der Eingabeeinrichtung mittels mindestens einer Karteneinheit (18), insbesondere mittels mindestens einer PCMCIA-Karte (PCMCIA = Personal Computer Memory Card International Association) oder mittels mindestens einer ISO-Karte (ISO = International Standardization Organisation) oder mittels mindestens einer anderen Speichereinheit, gespeichert werden.
